Europäisches Patentamt

(19) European Patent Office

Office européen des brevets

(11) Numéro de publication: **0 217 696**
**B1**

## FASCICULE DE BREVET EUROPEEN

(45) Date de publication du fascicule du brevet: **08.08.90**

(21) Numéro de dépôt: **86401859.3**

(22) Date de dépôt: **22.08.86**

(51) Int. Cl.⁵: **A 01 N 25/20,** **A 01 M 13/00,** **C 06 D 3/00**

(54) Papier diffusant un composé actif par combustion et diffuseur pyrotechnique utilisant un tel papier.

(30) Priorité: **27.08.85 FR 8512753**

(43) Date de publication de la demande:
**08.04.87 Bulletin 87/15**

(45) Mention de la délivrance du brevet:
**08.08.90 Bulletin 90/32**

(84) Etats contractants désignés:
**AT BE CH DE FR GB IT LI LU NL SE**

(56) Documents cités:
**BE-A- 363 580**
**BE-A- 655 516**
**FR-A-1 002 108**
**FR-A-1 602 618**
**FR-A-2 378 448**
**GB-A- 909 391**
**US-A-2 385 636**

(73) Titulaire: **SOCIETE NATIONALE DES POUDRES ET EXPLOSIFS**
**12, quai Henri IV**
**F-75181 Paris Cédex 04 (FR)**

(72) Inventeur: **Barruet, Patrick**
**5 rue des Compagnons de la Libération**
**F-47300 Villeneuve sur Lot (FR)**
Inventeur: **Fauconnier, Alain**
**17 Place Duquesne**
**F-91710 Vert-Le-Petit (FR)**
Inventeur: **Carle, Pierre-Régis**
**Cap Naio§8 avenue Gantaume**
**F-13260 Cassis (FR)**

Courier Press, Leamington Spa, England.

# EP 0 217 696 B1

**Description**

L'invention concerne les éléments diffusants constitués d'un support combustible et d'au moins un composé actif, tel qu'un pesticide ou un agent lacrymogène, et plus particulièrement les papiers diffusants ces types de composés actifs, qui sont destinés notamment à être brûlés dans des bâtiments, par exemple des salles à désinfecter, à désinsectiser, ou à dératiser, ou dans des enceintes au moins partiellement fermées telles que les serres de culture.

L'invention concerne également les appareils de fumigation, et plus particulièrement les diffusers pyrotechniques qui utilisent des composés actifs solidarisés à un support combustible.

La diffusion de composés actifs par combustion d'un support est connue depuis très longtemps, et l'utilisation de cellulose sous forme de coton est déjà décrite dans le brevet US 1,222,883 déposé en 1915, la combustion de ce coton réparti dans des chandelles à base de benjoin et de styrax étant facilitée par l'absorption de nitrate de potassium, qui permet l'obtention d'une flamme vive, nécessaire à la combustion de cette chandelle.

Il est, dans ce cadre, également connu d'utiliser comme support un papier filtre, imprégné d'une solution de nitrate de potassium et découpé en bandes qui sont imprégnées par une solution d'un insecticide stable jusqu'à 300°C comme l'hexachlorocyclohexane. Cette solution est par exemple décrite dans le brevet FR 1 002 108.

Une solution voisine impliquant également une combustion vive est enseignée par le brevet BE 655 516 qui assure la diffusion d'une quinone chlorée par combustion d'un support constitué soit par un mélange de nitrocellulose et de mélamine soit par un papier filtre contenant du nitrate de potassium.

Par ailleurs il est connu par le brevet BE 363 580 de fabriquer des papiers nitrocellulosiques destinés à constituer des poudres propulsives pour armes.

La diffusion de composés actifs par combustion avec flamme d'un support peut avantageusement être assurée à partir d'un boitier diffuseur muni d'une mèche d'allumage comme ensigné par le brevet US 2 385 636.

L'avènement des pesticides organiques, dont de nombreux composés sont totalement et instantanément dégradables lorsqu'ils sont chauffés à une température supérieure à 700°C, à très vite montré les inconvénients des combustion à flammes vives, et deux orientations ont été suivies. La première orientation a consisté à rechercher une combustion lente et incomplète qui correspond à une consummation se produisant à température inférieure, mais produisant souvent des fumées salissantes et même irritantes. La seconde orientation, qui est la plus utilisée actuellement, consiste à uniquement chauffer le support du composé actif jusqu'à atteindre la température d'évaporation de ce composé.

Le brevet belge 644 414, qui date de 1964, mentionne un corps consumable pour la lutte contre les insectes dont le support combustible est une matière organique ou minérale, telle que le kaolin, la silice, la pierre ponce, la calcaire, le carton, le papier, le bois, la laine ou la cellulose, qui est imprégné par un oxydant minéral tel que le nitrate de potassium, de baryum ou de plomb ou par des chlorates, et qui comporte des modérateurs de combustion tel que la thiourée.

Le brevet FR 2 500 265 déposé en 1981 par ROUSSEL UCLAF décrit également de façon annexe une composition fumigène dont le support consumable est constitué par un mélange de poudres de tabu, de feuilles de cèdre et de bois de pin comportant du vert brillant et du paranitrophénol, une telle composition fumigène se consumant très lentement, ce qui permet de réaliser des cordeaux commercialement dénommés spirales, fumigènes ou coïls dont la vitesse de combustion peut être de l'ordre de un millimètre par minute.

D'autres compositions, de nature pyrotechnique sont également utilisées pour diffuser beaucoup plus rapidement soit des pesticides, soit des opacifiants (rideau de fumée) ou des agents physiologiques (gaz lacrymogènes), mais ces compositions du fait de la plus grande vitesse de combustion, présentent une température de combustion plus élevée et dégagent plus de fumées. Un tel exemple de composition est mentionné dans le brevet FR 2 456 934 qui a été déposé en 1979 par la SNPE et qui se rapporte à une grenade lacrymogène dont le support combustible est constitué par un polymère, un oxydant minéral et des additifs permettant une combustion régulière.

A l'exception des spirales fumigènes qui se consumment très lentement, il est connu que les supports combustibles pyrotechniques qui comportent un oxydant minéral et un modérateur de combustion produisent trop de fumées et brûlent à une température un peu trop élevée et, par exemple, les brevets français 2 378 448 et 2 382 192 décrivent bien ces inconvénients.

Le brevet FR 2 378 448 déposé en 1978, décrit l'un des procédés pour lutter contre les insectes nuisibles qui consiste à chauffer un élément moulé de matière minérale poreuse imprégné par un composé actif, en utilisant un courant d'air chaud ascendant capable de chauffer cet élément à environ 200—430°C pour vaporiser ainsi le composé actif en une courte durée. Ce brevet se réfère à une technique antérieure de lutte contre les insectes nuisibles qui consiste à brûler le support combustible (méthode d'incinération) sur lequel est solidarisé le composé actif, et il est indiqué que pour améliorer cette technique il est nécessaire d'utiliser une grande quantité de composé actif, mais que malgré cela, du fait que le composé actif est diffusé dans un état où il adhère sur des particules de produits de combustion ayant une grande dimension, on n'obtient pas un contact suffisant de l'ingrédient actif avec les insectes et l'effet obtenu est faible, ces produits de combustion sous forme de fumée pouvant de plus déclencher à tort les détecteurs

2

de fumées placés dans les immeubles.

Le brevet FR 1 602 618 déposé en 1975 et le brevet FR 2 0382 192 déposé en 1978 décrivent un autre procédé de lutte contre les insectes nuisibles qui consiste également à chauffer un mélange d'un composé actif et d'un agent de propagation indirectement au moyen d'un élément de chauffage pour décomposer thermiquement l'agent de propagation sans entraîner sa combustion et pour volatiliser le composé actif. Le brevet FR 2 382 192 comporte de nombreux essais comparatifs basés sur le taux de fugacité effectif des composés actifs, qui mesure l'efficacité du procédé de diffusion et, alors que selon ce procédé de chauffage indirect les taux de fugacité sont compris entre 61,1% et 86,7%, les essais comparatifs réalisés en utilisant une composition pyrotechnique qui comporte 30% de nitrocellulose ne permettant d'obtenir que des taux de fugacité compris entre 1,7% et 8,6% qui montrent l'inefficacité de ces compositions pyrotechniques pour diffuser des insecticides notamment du groupe des pyréthrinoïdes. De plus, dans ce brevet, il est rappelé que la fumigation, avec des compositions d'un corps chimique actif et d'une matière combustible qui dégage en brûlant de la chaleur et de la fumée, est une méthode connue, et il est précisé que pour volatiliser rapidement une grande quantité de l'ingrédient actif, les matières combustibles doivent pouvoir dégager une grande quantité de fumée. Mais en général ces fumées ont une odeur piquante et sont (très) toxiques, et elles peuvent aussi faire croire à un incendie, et de plus la suie et autres matières qu'elles contiennent salissent lers murs tandis que la matière combustible entraîne, elle, un risque d'incendie. Ce brevet précise à la suite que les fumigateurs connus ont le sérieux inconvénient que la chaleur de combustion de la matières combustible décompose une partie de l'ingrédient actif qui est ainsi perdue, des mesures effectuées avec divers insecticides ayant donné des taux de volatilisation inférieure à 10%, comme il a été précisé ci-dessus.

La présente invention a pour but d'assurer une dispersion efficace et rapide au moyen d'un grand volume de gaz de combustion ne comportant que très peu de fumées et provenant d'une réaction particulière de combustion à température limitée pour ne pas dégrader le composé actif, et l'invention est caractérisée en ce que d'une part le papier est un papier nitrocellulosique dont le taux d'azote est supérieur à 5%, et en ce que d'autre par le composé actif présente une température de dégradation supérieure à 130°C.

Plus particulièrement le papier nitrocellulosique est constitué par un mélange de fibres de liaison et de fibres de nitrocellulose, ce mélange comportant au moins 18% de fibres de liaison dont au moins la moitié sont des fibres de cellulose. Ce papier nitrocellulosique présente une masse volumique comprise entre 0,35 g/cm$^3$ et 1,3 g/cm$^3$, les masses volumiques inférieures à 0,70 g/cm$^3$ étant plus performantes tant au point de vue des possibilités de fixation du composé actif que du point de vue combustibilité à température modérée, notamment lorsque l'épaisseur de ce papier nitrocellulosique est comprise entre 0,2 millimètre et 2,5 millimètres.

Avantageusement, le papier nitrocellulosique comporte un taux de fibres de nitrocellulose compris entre 50% et 75%, ce taux limite de 50% étant souhaitable pour entretenir la réaction de décomposition exothermique de la nitrocellulose dans la plupart des conditions d'utilisations, et ce taux limite de 75% étant le plus souvent nécessaire pour éviter une combustion vive qui s'effectuerait à température beaucoup plus élevée et qui serait néfaste, les taux d'azote des différentes nitrocellules couramment utilisables pouvant varier de 11% à 14%.

Les papiers nitrocellulosiques peuvent comporter également une résine, mais lorsque le composé actif à dissiper est un pesticide, il est alors très souhaitable que le taux de résine du papier nitrocellulosique soit inférieur à 2% car les résines utilisées dans les industries papetières, et qui sont souvent des polymères, augmentent le volume des fumées émises et donnent à ces fumées une odeur piquante désagréable. Par contre, lorsque le composé actif à dissiper est un agent physiologique tel qu'un agent lacrymogène utilisé par les forces de maintien de l'ordre, il n'y a alors aucun inconvénient à utiliser des taux de résine pouvant aller jusqu'à 6 ou 8%, ce taux de résine beaucoup plus élevé entraînant la production de fumées plus désagréables mais permettant toujours de maintenir une réaction de décomposition exothermique de la nitrocellulose à une température limitée.

Lorsque le paier nitrocellulosique diffusant n'est pas utilisé rapidement après sa fabrication, ce qui est le cas général, il est alors indispensable que ce papier comporte un stabilisant de la nitrocellulose, un taux de 0,5 à 1,5% de stabilisant étant suffisant.

Bien que l'invention permette d'obtenir de bons résultats dans tous les cas, et notamment lorsque le composé actif est solidarisé au papier, il est préférable que ce composé actif ne soit pas uniquement disposé sur les surfaces du papier mais au contraire soit réparti dans la masse même du papier. Cette disposition permet une réaction de décomposition plus homogène du papier nitrocellulosique et améliore la diffusion du composé actif dont les microcristaux ou les microdépôts sur les fibres du papier sont directement entraînés par les gaz chauds provenant de la décomposition exothermique de la nitrocellulose. En effet il a été constaté au cours des travaux relatifs à cette invention que la nitrocellulose, qui est utilisée en pyrotechnie pour ces propriétés déflagrantes (poudre pour fusil) et ses propriétés de combustion vive génératrice de gaz (propergols), pouvait en combinaison intime avec des fibres de celluloses se décomposer thermiquement à relativement faible température comprise en 130°C et 350°C, à condition toutefois que la réaction soit initiée par un allumage approprié et s'effectue à la pression atmosphérique.

Plus particulièrement le composé actif est réparti dans la masse du papier nitrocellulosique par imprégnation en phase liquide, les meilleurs résultats étant obtenus avec une phase liquide réalisée à partir d'une base liquide qui n'est pas un solvant gélatinisant de la nitrocellulose, Le choix particulier de cette base liquide dépend de la nature du composé actif et il est préférable que ce composé soit soluble dans la base liquide d'imprégnation, les principales bases devant être évitées du fait de leur action de solvant gélatinisant de la nitrocellulose étant: l'éther, l'acétone, le tétrahydrofurane, le diméthylformamide et la cyclohexanone. La base liquide d'imprégnation peut notamment être choisie dans le groupe constitué par: les alcools, le chlorure de méthylène, le diméthylsulfoxyde, l'hexaméthylphosphotriamide, le benzène, le toluène et le xylène.

Le papier nitrocellulosique imprégné de composé actif peut être brûlé à l'air libre, mais tant pour dans raisons de commodité de sécurité d'utilisation et de transport, que pour des raisons d'efficacité de la diffusion, il est préférable que ce papier soit placé dans in diffuseur pyrotechnique qui se présente comme une petite boîte munie d'ouvertures, équipée d'un dispositif d'allumage. Dans de telles conditions d'utilisation les travaux relatifs à cette invention ont mis en évidence que la température maximale atteinte au centre du diffuseur ne peut être abaissée en dessous de 200°C et dans ces conditions d'utilisation, pour obtenir une bonne diffusion du composé actif dans les gaz de combustion, il est alors nécessaire que la température de dégradation de ce composé soit supérieure à 170°C.

L'invention est plus particulièrement adaptée à la diffusion de composés actifs qui comportent un ou plusieurs pesticides, et notamment des insecticides ou des insectifuges, et l'invention a permis d'obtenir des résultats remarquables pour assurer la diffusion des insecticides appartenant au groupe des pyrèthrinoïdes ou assimilés à persistance d'action, et notamment: la deltaméthrine, la tralométhrine, la cyperméthrine, la perméthrine, la cyfluthrine, la cyhalothrine, la fenfluthrine, la fencythrine et le fenvalérate. L'efficacité de la diffusion de tels insecticides est toutefois fonction des températures qui correspondent aux débuts des exothermes de thermodégradation, et la diffusion d'insecticides, comme le fenvalérate ou la tralométhrine dont les débuts des exothermes de thermodégradation se produisent respectivement à 170°C et à 200°C, ne permet pas d'atteindre l'efficacité maximale de diffusion lorsqu'un diffuseur pyrotechnique est utilisé.

La réaction particulière de combustion du papier nitrocellulosique diffusant est une décomposition exothermique autoentretenue de la nitrocellulose, qui se produit sans flamme et s'accompagne d'un fort dégagement de gaz dont la seule partie visible correspond sensiblement à une grosse bouffée de cigare. L'obtention d'aussi peu de fumée n'est possible qu'à la condition que la température de combustion ne s'élève pas trop, et pour respecter cette condition il semble qu'il soit nécessaire que le rapport entre le poids du composé actif et le poids du papier nitrocellulosique soit inférieur à 0,5, ce qui est largement suffisant pour assurer la diffusion de tous les pesticides testés, l'optimum de rapport entre de poids des pyretrinoïdes à persistance d'action et le poids du papier nitrocellulosique étant par exemple compris entre 0,05 et 0,25.

Préférentiellement le papier nitrocellulosique diffusant se présente sous la forme d'une bande, ce qui facilite initialement l'imprégnation en phase liquide par le composé actif, cette imprégnation pourvant industriellement être effectuée en continu soit par trempage ou par rouleau presseur pour assurer une répartition dans la masse du papier, soit par couchage selon les techniques utilisées dans l'industrie papetière pour les traitements de surface, un simple saupoudrage sur l'une des faces de la bande de papier préalablement enduite d'un adhésif étant possible mais produisant une diffusion moins efficace du fait de la non dispersion du composé actif entre les fibres du papier nitrocellulosique. Lorsque la papier nitrocellulosique diffusant est utilisé dans in diffuseur pyrotechnique, il est avantageux que le rapport entre la longueur et la largeur de la bande soit compris entre 3 et 10, cette bande comportant des ondulations ou des plis de manière à réduire les zones de contact avec le fond du diffuseur, ce qui permet d'une part de réduire l'échauffement de la paroi du diffuseur et d'autre part de s'approcher des conditions de décomposition exothermique à l'air libre en évitant tout confinement dû aux parois de la boîte.

Les bandes de papier nitrocellulosique diffusant pliées en "accordéon" sont particulièrement adaptées aux diffuseurs pyrotechniques comportant une boîte munie d'un dispositif d'allumage et d'évents qui permettent la sortie des gaz de combustion dans lesquels sont incorporés les composés actifs. Plus particulièrement le rapport entre la surface totale des évents et le volume interne de la boîte, exprimés dans des unités homogènes, est compris entre 0,008 et 0,05 ce qui entraîne une élévation de la température au centre du diffuseur mais permet en compensation de se contenter d'un moindre échauffement initial pour amorcer la réaction de décomposition de la nitrocellulose sans produire de flammes. Les mêmes caractéristiques de fonctionnement conduisent à adopter préférentiellement les rapports qui suivent (exprimés dans des unités homogènes comme le gramme, le centimètre-carré et le centimètre-cube)

. d'une part entre la masse de papier nitrocellulosique et le volume interne de la boîte, un rapport qui est compris entre 0,005 et 0,2,

. et d'autre part un rapport entre la surface totale des évents et la masse du papier nitrocellulosique, un rapport qui est compris entre 0,3 et 7.

Avantageusement, le dispositif pyrotechnique d'allumage est fixé au centre du dessus d'une boîte cylindrique et traverse ce dessus, la composition d'amorçage par frottement étant extérieure à la boîte et un retard pyrotechnique assurant le relai jusqu'à la mèche pyrotechnique, qui est interne à la boîte et dont l'inflammation assure l'apport thermique nécessaire pour initier la réaction de décomposition des fibres de nitrocelluloses étroitement imbriquées avec les fibres de celluloses qui se consument.

Les avantages obtenus grâce à cette invention consistent essentiellement en ce qu'il est possible d'atteindre une température de réaction exothermique qui est suffisamment peu élevée pour permettre l'utilisation de la plus grande partie des composés actifs notamment des pesticides qui sont des molécules plus facilement thermodégradables que les molécules des agents physiologiques utilisables, les taux de fugacité obtenus sur les composés actifs testés étant toujours supérieures à 30%.

Un autre avantage, qui si il n'est pas une condition impérative de fonctionnement n'en est pas moins très intéressant, est la réduction considérable des fumées émises malgré la diffusion rapide des composés actifs, puisque par exemple il est possible en 10 secondes de traiter une pièce de 50 m$^3$ ein ne produisant que des fumées semblables à une bouffée de cigare. La combinaison de ces deux avantages permet en fait de supprimer les deux inconvénients majeurs des procédés de fumigation qui ont été décrits dans l'état de la technique de la présente description, et dans ces conditions l'important progrès technique apporté par la présente invention va permettre d'utiliser ce procédé de diffusion non seulement dans des bâtiments ou actuellement les procédés de vaporisation par chauffage électrique sont utilisés, mais également dans tous les bâtiments ou enceintes partiellement fermées telles que les serres de culture qui ne sont pas pourvus d'électricité et, pour lesquelles actuellement les seuls traitements utilisés sont la thermonébulisation d'une bouillie insecticide au travers d'un venturi ou la pulvérisation, les traitements par fumigation n'étant pas utilisés malgré leur praticité et leur rapidité, parce qu'ils dégradent beaucoup trop les composés actifs du fait de la température trop élevée de la réaction de combustion.

Dans ce qui suit, l'invention est exposé plus en détail à l'aide de données expérimentales comparatives et d'exemples de réalisation, ainsi qu'à l'aide d'un dessin dont la figure unique représente en coupe axiale un diffuseur pyrotechnique cylindrique conforme à l'invention qui utilise une charge de papier nitrocellulosique diffusant.

Les seules utilisations actuelles des papiers nitrocellulosiques sont de natures militaires puisque la quasi totalité de la production permet la fabrication des douilles combustibles des munitions de gros calibres, ce papier nitrocellulosique brûlant à très haute pression dans les tubes de canons. Deux procédés de fabrication sont utilisés, le premier procédé mis au point a été le procédé de nitration directe du papier qui est immergé dans un bac contenant le mélange sulfonitrique de nitration, et le second procédé, qui est plus récent utilise les techniques papetières, la pâte épaisse étant étendue en nappe, essorée par laminage, puis séchée. Ce second procédé permet un dosage très précis du taux d'azote du papier puisque la pâte à papier est préparée en mélangeant des fibres de liaison, telles que des fibres de cellulose pure, avec des fibres de nitrocellulose dont le taux d'azote est parfaitement connu, ce procédé assurant par ailleurs une répartition plus homogène des fibres de nitrocellulose dans la masse du papier, surout lorsque celui-ci est plus épais.

De nombreuses formulations de papiers nitrocellulosiques ont été réalisées et par exemple, les résultats mentionnés au tableau 1 ont été obtenus en préparant de la pâte nitrocellulosique avec d'une part du papier kraft déchiqueté comme source de fibres de cellulose, et d'autre part de la nitrocellulose dont le taux d'azote est 13,48, le stabilisant utilisé étant de la diphénylamine et la résine de floculation (émulsion acrylique) étant introduire à un taux variable.

## TABLEAU 1

| Papier nitrocel | % nitrocel | M. vol. (g/cm$^3$) | Masse (g) | Durée (s) | Tempér. (°C) |
|---|---|---|---|---|---|
| 1 | 68 | 0,46 | 5,6 | 7 | 173 |
| 2 | 65 | 1,02 | 5,0 | 11 | 155 |
| 3 | 65 | 0,48 | 5,0 | 8 | 131 |
| 4 | 57 | 0,84 | 5,2 | 19 | 148 |
| 5 | 50 | 1,22 | 5,1 | 47 | 138 |
| 6 | 50 | 0,50 | 5 | 49 | 127 |
| 7 | 35 | 0,38 | 5,3 | extinction | — |

. Dans ce tableau:
—la colonne de gauche indique le n° de l'échantillon de papier nitrocellulosique,
—"% nitrocel." correspond au pourcentage de nitrocellulose,
—"M. vol." correspond à la masse volumique de l'échantillon,
—"Masse" correspond à la masse totale mise à feu,
—"Durée" correspond à la durée de combustion complète,
—"Tempér." correspond à la température de décomposition sans flamme de la nitrocellulose au sein du papier.

. Les échantillons 1, 4 et 6 comportent 6% d'émulsion acrylique,

. Les échantillons 5 et 7 ne comportent que 3% d'émulsion acrylique,

. Les échantillons 2 et 3 ne comportent pas de résine.

Il a été constaté expérimentalement que la température de décomposition sans flamme de la nitrocellulose du papier ne variait pratiquement pas lorsque le rapport entre le poids du composé actif et le poids du papier nitrocellulosique est inférieur à 0,2, Au delà de ce taux la durée de combustion augmente légèrement et la température enregistrée tend à baisser. Les émissions de fumées sont toujours très faibles mais au delà d'un taux de résine de floculation de 2% les fumées sont irritantes et l'irritation est d'autant plus importante que la masse de l'échantillon est grande. Cette irritation est tout à fait inutile dans le cas de diffusion de pesticides tels que des insecticides, des insectifuges, des acaricides, des fongicides . . . à l'exception toutefois de la diffusion de la chloropicrine, par exemple, puisque dans ce cas là le but est de faire sortir les mammifères de leurs terriers, et notamment les renards. Au cours des essais effectués avec des taux de résine plus élevés, il a été constaté que la papier nitrocellulosique en lui-même n'a aucun effet insecticide. par contre, l'effet irritant des gaz de combustion ne présente aucun inconvénient lors de la diffusion d'agents physiologiques tels que les lacrymogènes, et renforce au contraire l'efficacité d'action de ces agents physiologiques.

Un papier nitrocellulosique lacrymogène a été préparé à partir de la formulation de papier qui suit:

75% de nitrocellulose à 12,7% d'azote,

18% de fibres longues inertes (mélange de fibres végétales de cellulose et de fibres synthétiques polyesters),

6% de résine acrylique,

1% de diphénylamine, ce papier préparé pour avoir une masse volumique de 0,8 g/cm$^3$ étant imbibé jusqu'à saturation par une phase liquide d'imprégnation constituée de 7% d'orthochlorobenzaldéhydemalononitrile (CS) dissous dans du benzène. Après séchage, 5 grammes de papier nitrocellulosique lacrymogène sont mis à feu par contact avec un filament résistant chauffé électriquement. L'effet d'indisposition physiologique est tel qu'il n'est que difficilement possible de pénétrer dans une pièce d'environ 20 m$^3$, même après avoir ouvert la fenêtre durant 1 minute. Le taux de fugacité du CS est pratiquement de 100% puisque sa température de décomposition est voisine de 600°C, et cela quel que soit le pourcentage de CS par rapport au benzène, ce pourcentage ayant varié de 0,5% à 13% selon les essais réalisés.

Les essais relatifs à la diffusion de pesticides ont été effectués avec les insecticides, qui offrent une grande gamme de thermodégradation et sont très efficaces, et plus particulièrement sur les pyrèthrinoïdes ou assimilés, à persistance d'action, Les caractéristiques de thermodégradation des principaux insecticides testés sont regroupées au tableau 2.

TABLEAU 2

| Principaux composés actifs | Exothermes de décomposition | | Pourcentage de composé restant après 15 secondes de chauffage à T (°C) | | | | | |
|---|---|---|---|---|---|---|---|---|
| | Début | Fin | 150° | 200° | 250° | 270° | 300° | 330° |
| Tralométhrine | 170° | 200° | — | — | 30% | 8% | — | — |
| Fenvalérate | 200° | 260° | 90% | 55% | — | 55% | — | — |
| Deltaméthrine | 250° | 320° | — | — | 100% | 85% | 45% | 7% |
| Cyperméthrine | 270° | 330° | — | — | — | 75% | 70% | 70% |
| Perméthrine | 270° | 330° | — | — | — | 100% | 90% | 80% |

Dans ce tableau 2 les exothermes de décomposition sont réalisés en introduisant les compsés actifs dans une cellule étanche à haute pression et la vitesse de montée en température est de 5°C par minute à partir de la température ambiante. Pour l'étude de la thermodégradation par contre, les composés actifs sont simplement introduits dans un tube de verre et chauffés à la température indiquée à l'aide d'un bain métallique; après un temps de 15 secondes à température constante, ils sont refroidis brusquement. Le temps de monter en température qui n'est pas pris en compte est également de 15 secondes pour atteindre la température de 300°C. Cette durée de 15 secondes à température constante se situe dans le plage préférentielle des durées de combustion des papiers nitrocellulosiques indiqués au tableau 1 et qui s'étend sensiblement de 7 secondes à 20 secondes.

Le tableau 2 montre que c'est la deltaméthrine qui présente la plus grande variation du pourcentage d'insecticide restant actif lorsque la température varie entre 250°C et 330°C et c'est donc avec cet insecticide du groupe des pyréthrinoïdes photostables que les essais biologiques sont les plus sensibles et les plus probants, cette sensibilité au delà de 270°C expliquant quelques écarts constatés durant les expérimentations.

L'étude particulière de la thermodégradation de la deltaméthrine a donc été effectuée afin d'obtenir des données complémentaires permettant d'interpréter les tests d'efficacité sur différents insectes, et les résultats de cette étude sont consignés dans le tableau 3.

TABLEAU 3

| Temps de chauffe | Témpérature maximum atteinte | Dégradation après chauffe |
|---|---|---|
| 30 s | 242°C | 10% |
| 30 s | 295°C | 20% |
| 14 s | 309°C | 30% |
| 5 s | 313°C | 20% |
| 5 s | 358°C | 77% |

Pour les différents essais réalisés avec la deltaméthrine, cet insecticide a été dissous dans le chlorure de méthylène, qui n'est pas un solvant gélatinisant de la nitrocellulose, et cette phase liquide d'imprégnation a été préparée en dissolvant de 0,1 à 0,2 g de deltaméthrine par centimètre-cube de chlorure de méthylène, cette dose de 100 à 200 milligrammes de deltaméthrine pouvant être directement absorbée dans la masse par une quantité de papier nitrocellulosique comprise entre 0,75 g et 2 g. D'autres solvants de la deltaméthrine, qui sont ni solvants, ni gélatinisants de la nitrocellulose seraient utilisables, tels que le benzène, le xylène ou l'H.M.P.T. Afin de rigoureusement connaître la quantité de deltamétrine imprégnant les échantillons rectangulaires de papier nitrocellulosique, tous les dépôts des phases liquides d'imprégnation ont été réalisés à l'aide d'une pipette à la surface du papier, de façon que la phase liquide mouille toute la surface. La phase liquide migre presque instantanément dans toute l'épaisseur du papier notamment lorsque l'épaisseur est inférieure à 2,5 millimètres et que la masse volumique du papier est inférieure à 0,7 g/cm$^3$. L'étude au microscope électronique montre que la deltaméthrine se cristallise préférentiellement sur les fibres de cellulose et les clichés montrent l'excellente adhésivité de la deltaméthrine sur toutes les fibres, les microcristaux enrobant ces fibres et notamment celles de nitrocellulose. Les microcristaux sont plus nombreux au voisinage des faces du papier nitrocellulosique mais la répartition dans la masse est assez homogène lorsque l'épaisseur du papier est inférieure à un millimètre, l'homogénéisation pouvant être améliorée en ralentissant l'évaporation du chlorure de méthylène, qui s'évapore normalement à l'air libre, après 5 à 10 minutes d'exposition.

D'autres essais de solidarisation de composés actifs sur le papier nitrocellulosique ont été effectués, notamment par saupoudrage sur l'une des faces du papier, préalablement encollée, et par enduction de l'une des faces à la racle, ce dernier procédé pouvant être industrialisé au moyen des techniques de couchage qui sont utilisées dans l'industrie papetière pour les traitements de surface, soit à la racle, soit aux rouleaux "size-press".

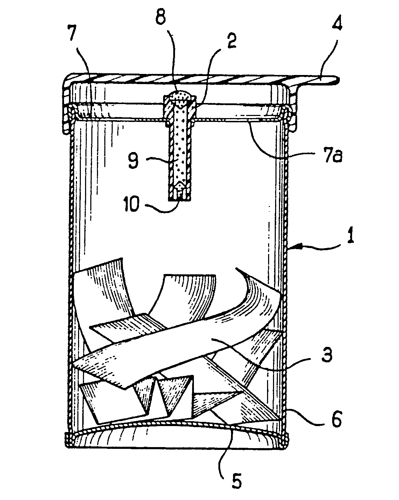

Les essais comparatifs de diffusion de composés actifs ont été effectués à l'aide du diffuseur pyrotechnique représenté à la figure 1 en coupe longitudinale axiale. La partie active du diffuseur est constituée d'une boîte métallique (1) qui est munie d'une dispositif d'allumage (2) central et qui contient au moins un élément de papier diffusant (3), un couvercle amovible (4) en matière plastique assurant l'étanchéité durant les stockages et les transports. La boîte métallique comprend un fond (5) sertie sur la virole cylindrique (6), et après remplissage de ce sous-ensemble le couvercle de diffusion (7) est également serti sur le haut de la virole cylindrique. Ce couvercle de diffusion comporte deux évents (7a) circulaires diamétralement opposés, et une allumette pyrotechnique (2) qui est fixée au centre, la composition d'amorçage par frottement (8) étant extérieure à la boîte. Cette allumette pyrotechnique comprend un retard pyrotechnique (9) de 5 secondes et une charge relais (10) constituée par une mèche imprégnée de poudre noire. Les charges de papier diffusant qui ont été testées sont de 0,5 g—1 g—2 g et 4 g de papier nitrocellulosique, imprégné de deltaméthrine à raison de 50 mg—100 mg et 200 mg par gramme de papier nitrocellulosique. Les éléments de papiers diffusants (3) sont rectangulaires et mis en vrac à l'intérieur de la boîte.

Le diffuseur pyrotechnique est utilisé en retirant le couvercle en matière plastique (4) et en l'enchenchant éventuellement sur le fond (5) de la boîte (1) dans le cas où le diffuseur doit être posé sur une surface particulièrement sensible à la chaleur. La composition d'amorçage (8) est initiée par frottement soit sur un frottoir de boîte d'allumettes, soit sur un frottoir fixe sur le couvercle (4), et cette composition d'amorcage met à feu le retard (9) qui brûle lentement jusqu'à ce que la mèche (10) imprégnée de poudre

7

noire produise un important flux thermique vers les éléments de papier diffusant, les quelques flammes qui se produisent restant toujours dans la boîté et ne remontant jamais jusqu'aux évents (7a). Le flux thermique généré par le dispositif d'allumage amorce la réaction de décomposition exothermique de la nitrocellulose qui s'accompagne d'un fort dégagement de gaz, et ces gaz, accompagnés d'un peu de fumée provenant essentiellement de la combustion des fibres de liaison, entrainent le composé actif au travers des évents et diffusent rapidement dans la totalité du volume clos dans lequel est placé le diffuseur pyrotechnique.

Les résultats d'essais donnés ci-après correspondent à la mise en oeuvre d'un diffuseur pyrotechnique dont la boîte métallique a un diamètre de 45 millimètres et une hauteur de 62 millimètres, les diamètres deux évents étant de 10 millimètres. Malgré ces dimensions très limitées, les mesures de température effectuées avec un thermocouple montrent le faible échauffement de la boîte métallique, les températures maximales atteintes étant fonction essentiellement du taux de nitrocellulose du papier nitrocellulosique, de la masse de papier placée dans la boîte du diffuseur et du type d'allumeur utilisé. Par exemple, en éliminant à titre expérimental l'allumette pyrotechnique et en utilisant un fil chauffé électriquement et temporairement mis en contact avec le papier diffusant jusqu'à ce que la réaction de décomposition exothermique de la nitrocellulose soit autoentretenue, les résultats mentionnés au tableau 4 ont été obtenus en utilisant un papier nitrocellulosique imprégné à 100 mg par gramme de composé actif inerte et comportant 65% de nitrocellulose à taux d'azote de 13,48% (le taux d'azote du papier nitrocellulosique étant de 8,79%).

TABLEAU 4

| Masses de papier nitrocellulosique | Température interne maximale (après 5 à 9 secondes) |
|---|---|
| 1 gramme | 220°C |
| 2 grammes | 250°C |
| 3 grammes | 300°C |
| 4 grammes | 320°C |

Les essais de détermination des seuils de combustion vive des papiers nitrocellulosiques ont montré que ces seuils étaient également fonction non seulement du taux de nitrocellulose du papier nitrocellulosique et du taux d'azote de cette nitrocellulose, mais étaient également fonction de la masse de papier et des caractéristiques du flux thermique d'allumage. Par exemple, en ne faisant varier que le seul paramètre taux de nitrocellulose à 13,8% de taux d'azote, et en prenant une même allumette pyrotechnique et une même masse de 2 grammes de papier nitrocellulosique imprégné de deltaméthrine à raison de 0,2 g par gramme de papier, cette masse de papier étant placée dans le diffuseur défini ci-dessus, la température maximale de 300°C a été atteinte après 5 secondes en utilisant un papier nitrocellulosique à 65% de nitrocellulose, tandis que la température maximale a atteint 410°C après 3,2 secondes en utilisant un papier nitrocellulosique à 73% de nitrocellulose.

En reprenant les mêmes caractéristiques que celles définies ci-dessus pour le papier nitrocellulosique à 65% de nitrocellulose, et en faisant varier la longueur de la mèche imprégnée de poudre noire qui est située à l'extrémité de l'allumette pyrotechnique, les résultats suivants ont été obtenus. Pour une longueur de mèche doublée, la température enregistrée dans les mêmes conditions passe de 300°C à 340°C; par contre, pour une longueur de mèche réduite de moitié, la température enregistrée passe de 300°C à 250°C.

Les températures enregistrées au contact des surfaces extérieures de la boîte métallique atteignent des valeurs maximales à la fin de l'émission des gaz de décomposition de la nitrocellulose, cette durée d'émission variant sensiblement de 3 secondes à 12 secondes. En reprenant les mêmes caractéristiques que celles définies plus haut, à savoir:

—2 grammes de papier nitrocellulosique d'épaisseur 0,8 mm ayant la composition suivante:
. 65% de fibres de nitrocellulose dont le taux d'azote est de 13,8%,
. 34% de fibres de cellulose,
. 1% de stabilisant,
—0,4 gramme de composé actif (pyréthrinoïde ou CS) réparti par imprégnation dans la masse du papier,
—boîte métallique de $\phi$=45 mm et hauteur=62 mm, avec un allumette pyrotechnique dont l'extrémité de la mèche imprégnée est située au niveau de la gaine extérieure, les températures maximales de surface (moyennes des relevès) obtenues après 6 secondes, sont les suivantes:

| —fond: | 85°C |
| —bas de la virole: | 65°C |
| —haut de la virole: | 75°C |
| —couvercle: | 105°C |

L'obtention de caractéristiques thermodynamiques très intéressantes permet d'assurer une diffusion efficace et rapide des différents composés actifs utilisables, et les mesures d'efficacité les plus probantes ont été réalisées avec un insecticide du groupe des pyréthrinoïdes qui est particulièrement sensible à la chaleur: la deltaméthrine, qui est par ailleurs actuellement l'un des insecticides les plus efficaces et dont les caractéristiques de sensibilité à la température sont indiquées aux tableaux 2 et 3 ci-dessus.

Toute la deltaméthrine qui imprègne le papier nitrocellulosique ne diffuse pas à l'extérieur du diffuseur pyrotechnique, l'analyse des cendres résiduelles dans la boîte métallique montrant qu'il subsiste de 4 à 12% de cet insecticide dans ces cendres. La diminution de ce pourcentage nécessite l'élévation de la température interne du diffuseur, qui semble entrainer automatiquement un taux de désactivation de la deltaméthrine plus élevé, et les essais ont montré que pour obtenir une efficacité réelle maximale qui correspond à un taux de fugacité supérieur à 50%, il était inutile de réduire le pourcentage de deltaméthrine dans les cendres au delà de 8 à 10%.

L'efficacité intrinsèque de la deltaméthrine est fonction de la température ambiante et de l'hygrométrie ambiante, cet insecticide étant en peu plus efficace lorsque la température est proche de 20°C et lorsque l'hygrométrie est faible. Ces deux facteurs expliquent partiellement les différences constatées aux cours des expérimentations entomologiques, l'étanchéité relative des différents batiments ou enceintes fermées étant un troisième facteur influençant les résultats expérimentaux qui ont été obtenus:

—dans les principaux bâtiments utilisés:
. les silos traditionnels d'un volume inférieur à 50 m³,
. les entrepots ou magasins pouvant aller jusqu'à 500 m³,
. les silos modernes horizontaux et verticaux, jusqu'à un diamètre de 10 m et une hauteur de 60 m,
—dans les enceintes de culture telles que:
. les tunnels "nantais" d'un diamètre de 0,5 à 0,6 m et d'une longueur d'une cinquantaine de mètres,
. les serres en matière plastique d'un diamètre de 3 m et d'une longueur de 25 m à 100 m,
. les serres vitrées de 6 m de large et 3 m de hauteur sur une longueur de 25 m.

Les résultats obtenus en salle close de laboratoire (salle de PEET & GRADY de 50 m³), à 23°C avec une hygrométrie constante égale à 60%, ont montré qu'il suffit d'utiliser 0,8 g de papier nitrocellulosique dans le diffuseur pyrotechnique pour obtenir au bout de 16 heures l'abattement total des indicateurs biologiques suivants: Musca domestica (diptères), Spodoptera littoralis (chenilles) et Rhizopertha dominica (coléoptères bostrychides). Le papier nitrocellulosique utilisé était à 65% de nitrocellulose (13,8% de N2) et l'imprégnation de deltaméthrine n'avait été que de 0,1 g par gramme de papier nitrocellulosique. Malgré ce faible dosage en insecticide, il a été observé que le seuil de 50% d'abattement des mouches domestiques (KT 50 des Musca domestica) était atteint au bout de 20 mn. Le même papier nitrocellulosique, mais utilisé à la dose de 1 g dans le diffuseur, et imprégné de deltaméthrine à raison de 0,2 g par gramme, a permis d'obtenir après 35 minutes 100% de mortalité des blattes Periplaneta americana.

Les premiers essais réalisés dans des structures réelles de culture ont été volontairement effectués dans les plus mauvaises conditions d'étanchéité, allors que les essais en laboratoire avaient été effectués dans une salle hermétiquement close. Ces essais ont été effectués sur le plateau de la CRAU un jour de mistral violent (vent de 80 à 110 km/heure) dans des serres de type tunnel plastique de fabrication courante, maintenues non hermétiquement fermées seulement pendant une heure après l'utilisation du diffuseur pyrotechnique. Les serres présentaient une longueur de 100 m et une section en large segment d'ellipse d'une largeur de 7 m et d'une hauteur de 2,5 m. Les indicateurs biologiques comprenaient les adultes de Musca domestica (M.d.) les chenilles (L4) de Spodoptera littoralis (S.l.), les adultes de Acanthoscelides obtectus (A.o. Coléoptères bruchides) et les adultes de Aphis craccivora (A.c. Puceron). Le papier nitrocellulosique utilisé était également à 65% de nitrocellulose (13,8% de N2) et l'imprégnation de deltaméthrine (M) étant de 0,1 ou 0,2 g par gramme de papier. Les résultats obtenus sont consignés au tableau 5, chaque valeur indiquée étant la moyenne des deux ou trois essais réalisés dans chacune des conditions testées.

TABLEAU 5

| Diffuseurs pyrotechniques | | | Taux d'abattement après 1 heure | | | |
|---|---|---|---|---|---|---|
| Dose M | M. papier | Nb boîtes | M.d. | S.I. | A.o. | A.C. |
| 0,1 g/g | 1 g | 5 | 100% | 90% | 30% | 100% |
| 0,1 g/g | 1 g | 3 | 80% | 80% | 50% | 100% |
| 0,2 g/g | 2 g | 3 | 98% | 90% | 45% | 100% |
| 0,1 g/g | 3 g | 2 | 95% | 70% | 55% | 90% |
| 0,2 g/g | 3 g | 2 | 90% | 85% | 60% | 100% |

Les diffuseurs aux nombres de 2, 3 ou 5 étaient régulièrement répartis le long de la serre et mis à feu simultanément. Les durées de fermeture des serres pour traitement sont couramment de 8 heures à 12 heures, et le taux d'abattement au bout de 1 heure n'est donc qu'une indication d'efficacité très intéressante qui ne correspond toutefois pas au taux réels d'abattement (à l'exception des taux de 100%) pouvant être obtenu avec des durées de fermeture normale et un vent faible, un vent nul n'étant pas souhaitable surtout lorsque les diffuseurs sont très éloignés les uns des autres. Par exemple, la destruction complète des chenilles de Spodoptera littoralis a été obtenue dans des délais de 3 h 30 à 5 h dans la même serre en plastique des jours de vent faible et de vent nul, en disposant 3 diffuseurs contenant chacun 4 grammes de papier nitrocellulosiques imprégné à raison de 0,05 g de deltaméthrine par gramme de papier. Le taux d'abattement des Aleurodes (Hémiptères) dans les serres de type tunnel plastique reste actuellement moins bon mais les seuls essais effectués l'ont été avec des diffuseurs dont le taux de fugacité n'était que de 45%. D'autres essais effectués dans la salle close de laboratoire ont permis d'atteindre des taux d'abattement de 80% et même 98% après une durée de contact de 4 heures à 15 heures.

D'autres essais ont été effectués pour mesurer l'efficacité de la diffusion d'insecticides sur des insectes des denrées stockées, et trois coléoptères curculionides ont été choisis:

—Sitophilus granarius (S.g.) qui s'attaque principalement au blé,

—Sitophilus oryzae (S.o.) qui s'attaque principalement au riz,

—Tribolium castaneum (T.c.) qui s'attaque principalement à la farine.

Les essais se sont déroulés dans la salle close de laboratoire de 50 m³ qui est hermétique, ce qui correspond sensiblement aux conditions réelles puisque les silos ou les entrepots présentent une assez bonne étanchéité. Les trois espèces de charançon ont été disposés de différentes façons:

—en contact direct avec l'atmosphère de la salle,

—en contact indirect, les insectes pouvant se soustraire à l'atmosphère traitée en s'enfonçant dans une couche de 2 cm de blé, de riz ou de farine,

—en position cachée sous une boîte de polystyrène dont la base est percée de trous permettant le passage des insectes.

Pour les essais effectués avec la deltaméthrine, ces essais permettant une comparaison plus directe avec les précédents essais décrits, un seul diffuseur pyrotechnique a été placé au sol dans la salle, et par exemple les résultats consignés au tableau 6 ont été obtenus en n'utilisant qu'un gramme de papier nitrocellulosique imprégné soit par 0,2 g de deltaméthrine (M), soit par 0,1 g, les temps de contact testés étant de 4 heures et de 16 heures, et les contrôles étant effectués soit 4 heures après le temps de contact, soit 7 jours après.

TABLEAU 6

| Pourcentages de mortalité | | | | | | |
|---|---|---|---|---|---|---|
| | | 0,2 g de Δ M | | | | 0,1 g de Δ M |
| Conditions | Insectes | Contacts 4 heures | | Contacts 16 heures | | |
| | | Contrôles | | Contrôles | | |
| | | 4 h | 7 j | 4 h | 7 j | 4 h |
| Contact direct au sol | Sg | 100 | 100 | 100 | 100 | 100 |
| | So | 50 | 60 | 100 | 100 | 100 |
| | Tc | 100 | 100 | 100 | 100 | 100 |
| Contact direct à 2 m de hauteur | Sg | 100 | 100 | 100 | 100 | 100 |
| | So | 100 | 100 | 100 | 100 | 100 |
| | Tc | 90 | 95 | 100 | 100 | 96 |
| Contact indirect au sol | Sg | 100 | 100 | 92 | 92 | 90 |
| | So | 40 | 45 | 36 | 28 | 80 |
| | Tc | 16 | 16 | 95 | 25 | 48 |
| Contact indirect | Sg | 100 | 100 | 100 | 70 | 95 |
| | So | 100 | 100 | 100 | 80 | 90 |
| | Tc | 20 | 15 | 85 | 20 | 25 |
| Position cachée | Sg | 100 | 100 | 95 | 100 | — |
| | So | 100 | 100 | 95 | 100 | — |
| | Tc | 98 | 98 | 98 | 80 | — |

**Revendications**

1. Elément diffusant constitué par un support combustible et par au moins un composé actif tel qu'un pesticide ou un agent lacrymogène caractérisé en ce que le dit support combustible est un papier nitrocellulosique contenant entre 50% et 75% de fibres de nitrocellulose et au moins 18% de fibres de liaison dont au moins la moitié sont des fibres de cellulose, le taux d'azote du dit papier étant supérieur à 5%, et en ce que d'autre part le dit composé actif présente une température de dégradation supérieure à 130°C.

2. Elément diffusant selon la revendication 1 caractérisé en ce que le papier nitrocellulosique présente une masse volumique comprise entre 0,35 g/cm$^3$ et 1,3 g/cm$^3$.

3. Elément diffusant selon la revendication 2 caractérisé en ce que l'épaisseur du papier nitrocellulosique est comprise entre 0,2 millimètre et 2,5 millimètres.

4. Elément diffusant selon l'une quelconque des revendications 1 à 3 caractérisé en ce que le papier nitrocellulosique comporte un stabilisant de la nitrocellulose.

5. Elément diffusant selon l'une quelconque des revendications 1 à 4 caractérisé en ce que le rapport entre le poids du composé actif et le poids du papier nitrocellulosique est inférieur à 0,5.

6. Elément diffusant selon l'une quelconque des revendications 1 à 5 caractérisé en ce que le composé actif est réparti dans la masse même du papier nitrocellulosique.

7. Elément diffusant selon la revendication 6 caractérisé en ce que le composé actif est réparti dans la masse du papier nitrocellulosique par imprégnation en phase liquide.

8. Elément diffusant selon la revendication 7 caractérisé en ce que la phase liquide d'imprégnation du papier nitrocellulosique est réalisée à partir d'une base liquide qui n'est pas un solvant gélatinisant de la nitrocellulose.

9. Elément diffusant selon la revendication 8 caractérisé en ce que le composé actif est soluble dans la base liquide d'imprégnation.

10. Elément diffusant selon la revendication 9 caractérisé en cs que la base liquide d'imprégnation est choisie dans le groupe constitué par les alcools, le chlorure de méthylène, le diméthylsulfoxyde, l'hexaméthylphosphotriamide, le benzène, le toluène et le xylène.

11. Elément diffusant selon l'une quelconque des revendications 1 à 10 caractérisé en ce que le compose actif présente une température de dégradation supérieure à 170°C.

12. Elément diffusant selon l'une quelconque des revendications 1 à 11 caractérisé en ce que le composé actif comporte un ou plusieurs pesticides.

13. Elément diffusant selon la revendication 12 caractérisé en ce que lesdits pesticides sont des insecticides ou des insectifuges.

14. Elément diffusant selon la revendication 13 caractérisé en ce que les dits insecticides appartiennent au groupe des pyréthrinoïdes, ou assimilés, à persistance d'action.

15. Elément diffusant selon la revendication 14 caractérisé en ce que le pyréthrinoïde ou assimilé est choisi dans le groupe constitué par la deltaméthrine, la tralométhrine, la cyperméthrine, la perméthrine, la cyfluthrine, la cyhalothrine, la fenfluthrine, la fencythrine et le fenvalérate.

16. Elément diffusant selon la revendication 14 caractérisé en ce que le rapport entre le poids du pyréthrinoïde et le poids du papier nitrocellulosique est compris entre 0,05 et 0,25.

17. Elément diffusant selon l'une quelconque des revendications 1 à 16 caractérisé en ce que le papier nitrocellulosique comporte en outre une résine introduite à un taux inférieur à 2%.

18. Elément diffusant selon l'une quelconque des revendications 1 à 17 caractérisé en ce qu'il se présente sous la forme d'une bande.

19. Diffuseur pyrotechnique comportant une boîte (1) qui est munie d'évents (7a) et d'un dispositif d'allumage (2) et qui renferme un combustible (3) assurant la dispersion d'un composé actif, caractérisé en ce que le dit combustible est un élément diffusant selon l'une quelconque des revendications 1 à 18.

20. Diffuseur pyrotechnique selon la revendication 19 caractérisé en ce que le rapport entre la surface totale des évents (7a) et la masse du papier nitrocellulosique est comprise entre 0,3 et 7.

21. Diffuseur pyrotechnique selon la revendication 19 caractérisé en ce que le rapport entre la surface totale des évents et le volume interne de la boîte (1) est compris entre 0,008 et 0,05.

22. Diffuseur pyrotechnique selon la revendication 19 caractérisé en ce que le rapport entre la masse du papier nitrocellulosique et le volume interne de la boîte (1) est compris entre 0,005 et 0,2.

**Patentansprüche**

1. Element zur Wirkstoffverteilung, bestehend aus einem brennbaren Träger und mindestens einem Wirkstoff wie einem Pestizid oder einem tränenreizenden Mittel, dadurch gekennzeichnet, daß der brennbare Träger ein Nitrocellulosepapier ist, das 50 bis 75% Nitrocellulosefasern und mindestens 18% Verbindungsfasern enthält, von denen mindestens die Hälfte Cellulosefasern sind, wobei der Stickstoffgehalt des Papiers über 5% beträgt, und der Wirkstoff eine Zersetzungstemperatur oberhalb 130°C besitzt.

2. Element zur Wirkstoffverteilung nach Anspruch 1, dadurch gekennzeichnet, daß das Nitrocellulosepapier eine Dichte von 0,35 bis 1,3 g/cm³ aufweist.

3. Element zur Wirkstoffverteilung nach Anspruch 2, dadurch gekennzeichnet, daß die Dicke das Nitrocellulosepapiers 0,2 bis 2,5 mm beträgt.

4. Element zur Wirkstoffverteilung nach einem der Ansprüche 1 bis 3, dadurch gekennzeichnet, daß das Nitrocellulosepapier ein Stabilisierungsmittel für die Nitrocellulose enthält.

5. Element zur Wirkstoffverteilung nach einem der Ansprüche 1 bis 4, dadurch gekennzeichnet, daß das Verhältnis des Gewichts des Wirkstoffs zum Gewicht des Nitrocellulosepapiers kleiner als 0,5 ist.

6. Element zur Wirkstoffverteilung nach einem der Ansprüche 1 bis 5, dadurch gekennzeichnet, daß der Wirkstoff in der Masse des Nitrocellulosepapiers selbst verteilt ist.

7. Element zur Wirkstoffverteilung nach Anspruch 6, dadurch gekennzeichnet, daß der Wirkstoff durch Imprägnierung in flüssiger Phase in der Masse des Nitrocellulosepapiers verteilt ist.

8. Element zur Wirkstoffverteilung nach Anspruch 7, dadurch gekennzeichnet, daß die flüssige Phase zur Imprägnierung des Nitrocellulosepapiers aus einer flüssigen Basis hergestellt wird, die kein Lösungsmittel ist, das Nitrocellulose gelatiniert.

9. Element zur Wirkstoffverteilung nach Anspruch 8, dadurch gekennzeichnet, daß der Wirkstoff in der flüssigen, zur Imprägnierung verwendeten Basis löslich ist.

10. Element zur Wirkstoffverteilung nach Anspruch 9, dadurch gekennzeichnet, daß die zur Imprägnierung verwendete flüssige Basis unter Alkoholen, Methylenchlorid, Dimethylsulfoxid, Hexamethylphosphortriamid, Benzol, Toluol und Xylol ausgewählt ist.

11. Element zur Wirkstoffverbindung nach einem der Ansprüche 1 bis 10, dadurch gekennzeichnet, daß der Wirkstoff eine Zersetzungstemperatur oberhalb 170°C aufweist.

12. Element zur Wirkstoffverteilung nach einem der Ansprüche 1 bis 11, dadurch gekennzeichnet, daß der Wirkstoff ein oder mehrere Pestizide umfaßt.

13. Element zur Wirkstoffverteilung nach Anspruch 12, dadurch gekennzeichnet, daß die Pestizide Insecticide oder Insectifuge sind.

14. Element zur Wirkstoffverteilung nach Anspruch 13, dadurch gekennzeichnet, daß die Insecticide zur Gruppe der Pyrethrinoide oder vergleichbarer Verbindungen mit Wirkungspersistenz gehören.

15. Element zur Wirkstoffverteilung nach Anspruch 14, dadurch gekennzeichnet, daß das Pyrethrinoid oder die vergleichbare Verbindung unter Deltamethrin, Tralomethrin, Cypermethrin, Permethrin, Cyfluthrine, Cyhalothrine, Fenfluthrine, Fencythrine und Fenvalerat ausgewählt ist.

16. Element zur Wirkstoffverteilung nach Anspruch 14, dadurch gekennzeichnet, daß das Verhältnis des Gewichts des Pyrethrinoids zum Gewicht des Nitrocellulosepapiers im Bereich von 0,05 bsi 0,25 liegt.

12

17. Element zur Wirkstoffverteilung nach einem der Ansprüche 1 bis 16, dadurch gekennzeichnet, daß das Nitrocellulosepapier ferner ein engebrachtes Harz in einer Menge unter 2% aufweist.

18. Element zur Wirkstoffverteilung nach einem der Ansprüche 1 bis 17, dadurch gekennzeichnet, daß es in Bandform vorliegt.

19. Pyrotechnischer Diffusor, der eine Dose (1) umfaßt, die mit Gasabzugsöffnungen (7a) sowie einer Zündeinrichtung (2) versehen ist und einen Brennstoff (3) enthält, der die Verteilung eines Wirkstoffs gewährleistet, dadurch gekennzeichnet, daß der Brennstoff ein Element zur Wirkstoffverteilung nach einem der Ansprüche 1 bis 18 ist.

20. Pyrotechnischer Diffusor nach Anspruch 19, dadurch gekennzeichnet, daß das Verhältnis der Gesamtfläche der Gasabzugsöffnungen (7a) und der Masse des Nitrocellulosepapiers 0,3 bis 7 beträgt.

21. Pyrotechnischer Diffusor nach Anspruch 19, dadurch gekennzeichnet, daß das Verhältnis der Gesamtfläche der Gasabzugsöffnungen zum Innenvolumen der Dose (1) 0,008 bis 0,05 beträgt.

22. Pyrotechnischer Diffusor nach Anspruch 19, dadurch gekennzeichnet, daß das Verhältnis der Masse des Nitrocellulosepapiers zum Innenvolumen der Dose (1) 0,005 bis 0,2 beträgt.

## Claims

1. Distributing element consisting of a combustible substrate and of at least one active compound such as a pesticide or a lachrymator, characterized in that the said combustible substrate is a nitrocellulose-based paper containing between 50% and 75% of nitrocellulose fibres and at least 18% of bonding fibres at least half of which are cellulose fibres, the nitrogen content of the said paper being greater than 5%, and in that, furthermore, the said active compound has a decomposition temperature above 130°C.

2. Distributing element according to Claim 1, characterized in that the nitrocellulose-based paper has a density of between 0.35 $g/cm^3$ and 1.3 $g/cm^3$.

3. Distributing element according to Claim 2, characterized in that the thickness of the nitrocellulose-based paper is between 0.2 millimetres and 2.5 millimetres.

4. Distributing element according to any one of Claims 1 to 3, characterized in that the nitrocellulose-based paper comprises a stabilizer for nitrocellulose.

5. Distributing element according to any one of Claims 1 to 4, characterized in that the ratio of the weight of the active compound to the weight of the nitrocellulose-based paper is less than 0.5.

6. Distributing element according to any one of Claims 1 to 5, characterized in that the active compound is distributed within the bulk of the nitrocellulose-based paper itself.

7. Distributing element according to Claim 6, characterized in that the active compound is distributed within the bulk of the nitrocellulose-based paper by impregnation in a liquid phase.

8. Distributing element according to Claim 7, characterized in that the liquid phase for impregnating the nitrocellulose-based paper is made from a liquid base which is not a solvent which gels nitrocellulose.

9. Distributing element according to Claim 8, characterized in the active compound is soluble in the liquid impregnating base.

10. Distributing element according to Claim 9, characterized in that the liquid impregnating base is chosen from the group consisting of alcohols, methylene chloride, dimethyl sulphoxide, hexamethylphosphotriamide, benzene, toluene and xylene.

11. Distributing element according to any one of Claims 1 to 10, characterized in that the active compound has a decomposition temperature above 170°C.

12. Distributing element according to any one of Claims 1 to 11, characterized in that the active compound comprises one or more pesticides.

13. Distributing element according to Claim 12, characterized in that the said pesticides are insecticides or insect-repellents.

14. Distributing element according to Claim 13, characterized in that the said insecticides belong to the pyrethroid group, or similar, with persistent activity.

15. Distributing element according to Claim 14, characterized in that the pyrethroid or similar is chosen from the group consisting of deltamethrin, tralomethrin, cypermethrin, permethrin, cyfluthrin, cyhalothrin, fenfluthrin, fencytrin and fenvalerate.

16. Distributing element according to Claim 14, characterized in the ratio of the weight of the pyrethroid to the weight of the nitrocellulose-based paper is between 0.05 and 0.25.

17. Distributing element according to any one of Claims 1 to 16, characterized in that the nitrocellulose-based paper additionally comprises a resin added in a proportion of less than 2%.

18. Distributing element according to any one of Claims 1 to 17, characterized in that it is in the form of a strip.

19. Pyrotechnic distributor comprising a can (1) which is equipped with vents (7a) and with an igniting device (2) and which contains a fuel (3) ensuring the dissemination of an active compound, characterized in that the said fuel is a distributing element according to any one of Claims 1 to 18.

20. Pyrotechnic distributor according to Claim 19, characterized in that the ratio of the total surface area of the vents (7a) to the mass of the nitrocellulose-based paper is between 0.3 and 7.

21. Pyrotechnic distributor according to Claim 19, characterized in that the ratio of the total surface area of the vents to the internal volume of the can (1) is between 0.008 and 0.05.

22. Pyrotechnic distributor according to Claim 19, characterized in that the ratio of the mass of the nitrocellulose-based paper to the internal volume of the can (1) is between 0.005 and 0.2.